# EUROPEAN PATENT APPLICATION

(11) **EP 1 814 311 A1**
(43) Date of publication of application: **01.08.2007**
(21) Application number: 05785877.1
(22) Date of filing: 14.09.2005
(51) Int. Cl.: H04N 5/225, G09G 3/36, G09G 3/20

(54) **ELECTRONIC APPARATUS AND ELECTRONIC APPARATUS CONTROL METHOD**

(30) Priority: 19.11.2004 JP 2004335362
(71) Applicant: SONY CORPORATION, Minato-ku Tokyo (JP)
(72) Inventor: OHATA, Tadahiro, SONY CORPORATION, Tokyo 1410001 (JP)
(74) Representative: Smith, Samuel Leonard
(86) International application number: PCT/JP2005/017328
(87) International publication number: WO 2006/054388

(57) **Abstract**

An electronic apparatus and an electronic apparatus control method that accomplish a low power consumption are disclosed. A switch 11 disposed on a video camera 1 is operated. A process corresponding to the operation is executed. When the executed process is a predetermined process for example loading/unloading of a cassette or fast-forward/rewind of the cassette, the video camera 1 is controlled such that power consumed by a panel 12 and a view finder 13 is reduced. When the power consumption is reduced, brightness of the panel 12 and the view finder 13 is decreased. However, when a predetermined process of loading or the like is executed, the panel 12 and the view finder 13 are not used. Thus, the power consumption of the video camera 1 can be reduced without affecting the user's operation of the video camera 1.

## Description

### Technical Field

The present invention relates to an electronic apparatus and an electronic apparatus controlling method, in particular, to those that allow power consumption to be reduced.

### Background Art

Many image capturing devices such as video cameras and digital cameras are provided with a display section such as a monitor and/or a view finder that displays a photographic subject and a menu screen used for various settings. Personal computers (PCs) have a display section simply called "display" or the like. In these electronic devices such as image capturing devices and PCs, their power consumption is decreased by controlling the brightness of the display section. For example, Japanese Patent Application Laid-Open No. HEI 5-188869 describes an invention of which the backlight of an LCD (Liquid Crystal Display) panel of the display section as the display section is turned off when the device is not operated for a predetermined time period. Japanese Patent Application Laid-Open No. HEI 10-312174 describes an invention of a backlight control system that turns on/off the backlight corresponding to the resolution of an image displayed on the LCD panel. Japanese Patent Application Laid-Open No. 2002-34132 describes an invention of a liquid crystal display device that illuminates a necessary portion in synchronization with a video signal by using a reflection plate. Japanese Patent Application Laid-Open No. 2003-60944 describes an invention of an electronic camera of which the power consumption of an electronic camera is reduced by turning on/off the backlight of a monitor screen corresponding to the remaining memory capacity of the electronic camera or by turning off the backlight when the battery remaining power becomes low. However, these related art references have the following drawbacks. For example, in the invention described in Japanese Patent Application Laid-Open No. HEI 5-188869, when the device is not operated for the predetermined time period, the backlight of the LCD panel becomes dark. Thus, to keep the brightness of the backlight of the LCD panel in a predetermined level, the user needs to repeatedly perform some operation for the device. In other words, in the related art, when the user does not operate the device for a predetermined time period, the backlight of the LCD panel becomes dark or is turned off. Thus, there is a risk that the backlight becomes dark or is turned off even if the user does not want to do so. In addition, in the related art, when the device is operated in some manner, the device determines that it be in an operation state, causing the backlight of the LCD panel to become a regular brightness level. However, even if the user performs some operation for the device and it performs a process corresponding to the operation, when the device executes the process, he or she may not watch the LCD panel at any moment. In other words, when the device executes a process, unless the user uses the LCD panel, if the power consumption of the backlight is reduced, the power consumption of the overall device can be more effectively reduced. In addition, some processes of an electronic device consume large electric power than other processes.
When such a process is executed, if the power consumption of the LCD panel is reduced, the overall power consumption of the electronic device can be more effectively reduced. Therefore, an object of the present invention is to provide an electronic apparatus and an electronic apparatus control method that allow the power consumption of a display section of the apparatus to be properly controlled corresponding to a process executed when the apparatus is operated. Another object of the present invention is to provide an electronic apparatus and an electronic apparatus control method that allow the power necessarily consumed by a process to be calculated and the power consumed by the display section to be controlled corresponding to the calculated power.

### Disclosure of the Invention

To solve the foregoing problem, claim 1 of the present invention is an electronic apparatus having a display section and input means, comprising execution means for executing a process corresponding to an operation of the input means; and control means for reducing power consumed by the display section when the process is a predetermined process.

Claim 7 of the present invention is an electronic apparatus control method, comprising the steps of executing a process corresponding to an operation of input means; and reducing power consumed by a display section when the process is a predetermined process.

According to the present invention, the power consumption of the electronic apparatus can be reduced and a battery can be used for a longer time than before. In addition, the allowable current value of the battery can be decreased. Moreover, according to the present invention, when a process that necessarily consumes a large current is executed, since the current consumed by the display section is decreased, the current consumed by the overall apparatus can be decreased. As a result, the load applied to the battery can be reduced. When a process that consumes a large current is executed, since the current that instantaneously flows decreases, the load applied to a circuit that composes each section of the apparatus can be reduced, resulting in an increase of the service lift of the circuit. In addition, according to the present invention, the power consumption of the display section can be reduced and the saved power can be used by another process. For example, in a battery having a constant load capacity, when the power consumed by the display section is reduced, if the saved power is used by the fast-forward/rewind or the like of a cassette of a magnetic tape, the fast-forward/rewind can be performed at higher speed.

### Brief Description of Drawings

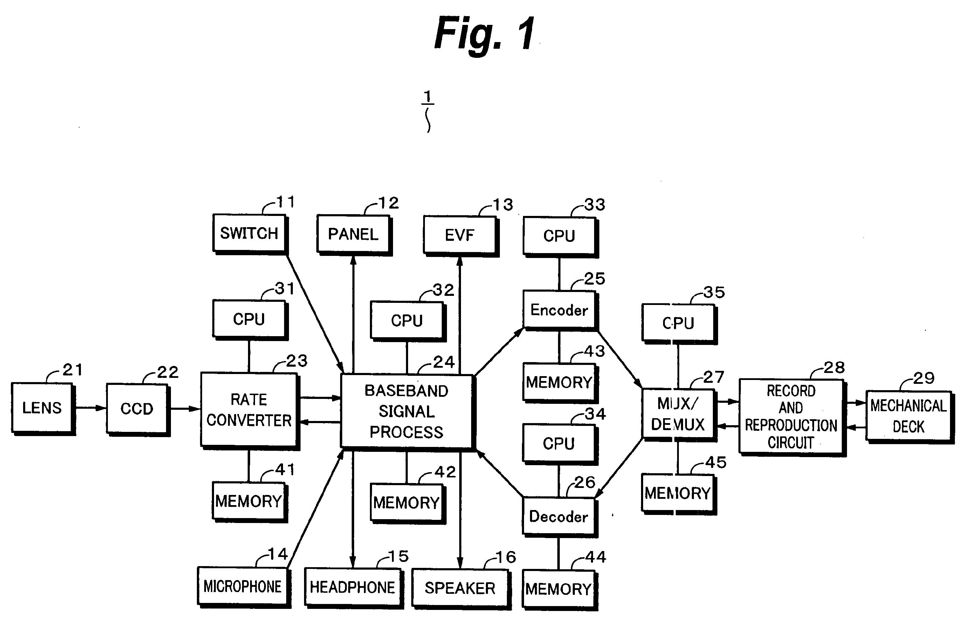

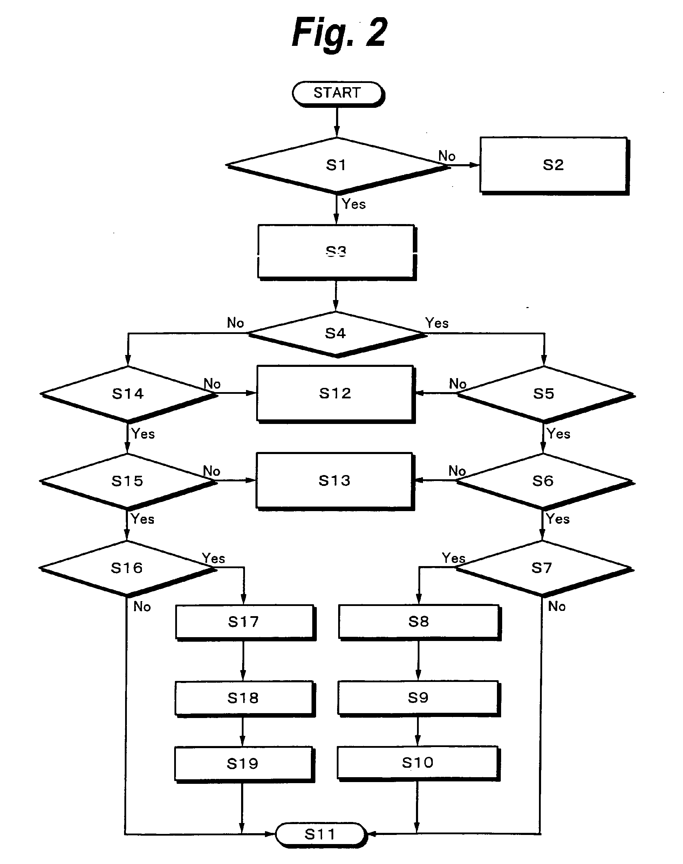

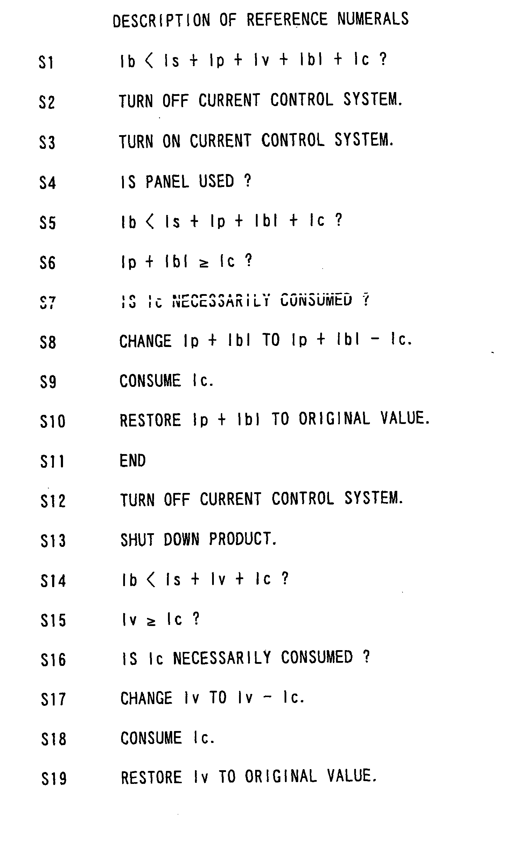

Fig. 1 is a block diagram showing a structure of a video camera 1 according to an embodiment of the present invention. Fig. 2 is a flow chart showing a current control system according to an embodiment of the present invention.

### Best Modes for Carrying out the Invention

Next, with reference to the accompanying drawings, an embodiment of the present invention will be described. In this embodiment, it is assumed that the present invention is applied to a video camera 1.

Fig. 1 shows an example of a structure of the video camera 1 according to this embodiment. The video camera 1 is provided with a switch 11 as an input means. The switch 11 is a collective term of switches disposed on the video camera 1. The switch 11 includes an open/close operation of a cassette deck. When the switch 11 is operated, an electric signal is generated corresponding to the operation manner and the generated signal is supplied to a baseband signal process section 24. In addition, an electric signal corresponding to the open/close operation of the cassette deck is generated and the generated signal is supplied to the baseband signal process section 24.

In addition, the video camera 1 is provided with a panel 12 and a view finder (EVF: Electric View Finder) 13 that are members of a display section. An image captured through a lens 21 is output to the panel 12 or the view finder 13. The user watches an image displayed on the panel 12 or the view finder 13, decides a photographic subject of the image, and performs focusing and zooming operations for the image.

The panel 12 is for example an LCD panel composed of an LCD. Recorded images and reproduced images reproduced from a record medium such as a magnetic tape are displayed on the panel 12. The panel 12 may be a touch panel on which the user can perform various settings with his or her finger, a stylus, or the like. When the panel 12 is a touch panel, a signal corresponding to touching on the panel 12 is generated and the generated electric signal is supplied to the baseband signal process section 24.

In addition, the video camera 1 is provided with a microphone 14 that collects surrounding sound upon shooting of a moving image and with a speaker 16 and a headphone 15 which are members of an audio output means. In addition, the video camera 1 can be provided with an external I/F (Interface) (not shown) that connects the video camera 1 to an external monitor or a personal computer.

Next, a signal process of the video camera 1 will be described. The video camera 1 of this embodiment can record an electric image signal captured by an image sensor to a magnetic tape. In addition, the video camera 1 can reproduce an image signal from a magnetic tape and display the reproduced image on the panel 12 of the video camera 1.

The video camera 1 of this embodiment can deal with, as signal formats of image signals, DV format, 720-line (progressive system) recoding video format according to the MPEG (Moving image Coding Experts Group) 2 system (hereinafter this format is referred to as the HD1 format), and 1080-line (interlaced system) recording video format according to the MPEG2 system (hereinafter this format is referred to as the HD2 format).

The video camera 1 of this embodiment can record images both in the DV format and the HD2 format to one magnetic tape. In addition, the video camera 1 can reproduce images from a magnetic tape on which images coexist in the DV format, the HD1 format, and the HD2 format.

First of all, a recording process as a signal process will be described. Light emitted from a photographic subject enters a CCD (Charge Coupled Device) 22 as an image sensor through the lens 21. The CCD 22 photo-electrically converts the light into an electric signal as a captured image signal. In this embodiment, the CCD 22 is so-called 3-CCD type that has three primary-color CCDs of red (R), green (G), and blue (B). Thus, the CCD 22 outputs signals of RGB colors.

Captured image signals that are output from the CCD 22 are supplied to an image signal process section (not shown). The image signal process section has a CDS (Correlated Double Sampling) circuit that performs a noise reduction process. In addition, the image signal process section performs other predetermined signal processes such as a brightness compensation process and a color compensation process. Thereafter, the image signal process section outputs the resultant signals to a rate converter 23.

The rate converter 23 converts the supplied captured image signals as analog signals into digital signals as digital video signals and then converts these signals into image signals corresponding to the rate of the angle of field.

Output signals of the rate converter 23 are supplied to the baseband signal process section 24. The baseband signal process section 24 performs various signal processes for the supplied digital video signals such as an image size conversion process corresponding to a designated format, a color system conversion process, and an image size conversion process of fitting an image to the panel 12 and the view finder 13.

In addition, an audio signal is supplied to the baseband signal process section 24. Sound is collected by the microphone 14. The microphone 14 converts the collected sound into an analog audio signal. The analog audio signal is supplied to an audio signal process section (not shown). The audio signal process section performs an amplification process, an audio quality compensation process, and a noise reduction process for the analog audio signal and converts the analog audio signal into a digital audio signal. The converted digital audio signal is supplied to the baseband signal process section 24. The baseband signal process section 24 performs various signal processes for the digital audio signal.

The digital video signals and the digital audio signal are supplied from the baseband signal process section 24 to an encoder 25. In addition, the digital video signals are supplied to the panel 12 or the view finder 13. When the video camera 1 is provided with an external output terminal, the digital video signals are also supplied to the external output terminal.

The encoder 25 is composed of an MPEG video signal process section, an MPEG audio signal process section, and a DV process section (not shown). The encoder 25 performs a compression-encoding process corresponding to the video format of the digital video signals to be recorded. When the video format of the digital video signals is the HD2 format, the digital video signals are supplied to the MPEG video signal process section. The MPEG video signal process section performs a compression-encoding process according to the MPE2 system for the digital video signals. The MPEG video signal process section outputs compressed digital video signals. The compressed digital video signals are supplied to an MUX/DEMUX 27.

The MPEG audio signal process section performs a compression-encoding process according to for example the MPEG1 layer 2 system for the digital audio signal. The MPEG audio signal process section outputs a compressed audio signal. The compressed audio signal is supplied to the MUX/DEMUX 27.

The MUX/DEMUX 27 multiplexes the supplied compressed digital video signals and audio signal and outputs a multiplexed signal. The multiplexed signal is supplied to a record and reproduction circuit 28.

When the video format of the digital video signals to be recorded is the DV format, the digital video signals and the digital audio signal are supplied to the DV process section. The DV process section compression-encodes the digital video signals and the digital audio signal according to for example the intra-frame compression system using for example the DCT (Discrete Cosine Transform) system. The compression-encoded signals are supplied to the MUX/DEMUX 27. The MUX/DEMUX 27 multiplexes the compressed signals and outputs a multiplexed signal. The multiplexed signal is supplied to the record and reproduction circuit 28.

The record and reproduction circuit 28 performs an error-correction-code encoding process and a record-encoding process for the supplied signal and outputs an error-corrected signal. The error-corrected signal is recorded to the magnetic tape loaded into a mechanical deck 29.

When a reproducing process is performed, the reverse process of the recording process is performed. A signal is reproduced from the magnetic tape. The reproduced signal is supplied to the record and reproduction circuit 28. The record and reproduction circuit 28 performs a demodulation process for the supplied signal and obtains a reproduced digital signal. The record and reproduction circuit 28 performs an error-correction process for the obtained reproduced digital signal and outputs the resultant reproduced digital signal. The resultant reproduced digital signal is supplied to the MUX/DEMUX 27.

The MUX/DEMUX 27 demultiplexes the reproduced digital signal into digital video signals and a digital audio signal and supplies those signals to a decoder 26.

The decoder 26 performs a decoding process corresponding to the format of the reproduced digital signals and outputs decoded reproduced digital video signals and audio signal. The decoded reproduced digital video signals and audio signal are supplied to the baseband signal process section 24.

The baseband signal process section 24 performs various signal processes for the supplied reproduced digital video signals and audio signal. Like in the recording process, the baseband signal process section 24 performs for example the image size conversion process and the color size process corresponding to the format of the reproduced digital video signals. In addition, the baseband signal process section 24 performs the image size conversion process of displaying the digital video signals on the panel 12 and the view finder 13.

In addition, the baseband signal process section 24 performs a signal process for the reproduced audio signal so that it can be output to the outside of the video camera 1. The audio signal process section (not shown) converts the reproduced audio signal as a digital signal into an analog signal. The converted reproduced analog signal is supplied to for example the headphone 15 and the speaker 16.

The rate converter 23, the baseband signal process section 24, the encoder 25, the decoder 26, and the MUX/DEMUX 27 are controlled by a CPU (Central Processing Unit) 31, a CPU 32, a CPU 33, a CPU 34, and a CPU 35, respectively. Each section of the video camera 1 is controlled by the corresponding CPU that executes a program stored in a corresponding one of a memory 41, a memory 42, a memory 43, a memory 44, and a memory 45. The memory 41, the memory 42, the memory 43, the memory 44, and the memory 45 are composed of for example a ROM (Read Only Memory) that stores a program or a RAM (Random Access Memory) that stores various types of data in such manner that they can be rewritten.

In this embodiment, each CPU controls the corresponding section of the video camera 1. Instead, one CPU may control the overall video camera 1.

Next, the controlling method of the display section, which is a feature of the present invention, will be described. In this embodiment, the display section to be controlled is described as the panel 12 or the view finder 13.

Unlike the related art of which the brightness of the display section is controlled when a device is not operated for a predetermined time period, according to the present invention, when a predetermined operation is performed and a process corresponding to the operation is executed, if the executed process is a predetermined process, the power consumed by the display section is controlled.

In this embodiment, examples of the predetermined process for which the power consumed by the display section is controlled are loading/unloading process of mounting and dismounting the cassette into and from the mechanical deck 29 and fast-forward/rewind process of the cassette.

In this embodiment, "loading" represents a process of mounting a magnetic tape of a cassette on a cylinder and a capstan, whereas "unloading" represents a process of dismounting the magnetic tape from the cylinder and the capstan. When the cassette is inserted into the cassette deck and the cassette deck is closed, the cassette is loaded into the video camera 1 and mounted thereon. In contrast, when the cassette deck is opened, the cassette is unloaded from the cassette deck.

In the following description, the loading/unloading and the fast-forward/rewind of the cassette are collectively termed the loading or the like.

For example, when the mounting operation of inserting the cassette into the cassette deck and closing the cassette deck is performed, an electric signal corresponding to the mounting operation is generated and the generated electric signal is supplied to the baseband signal process section 24.

The CPU 32 that controls the baseband signal process section 24 analyzes the supplied electric signal and generates a control signal that executes a process corresponding to the mounting operation. When the mounting operation is performed, the CPU 32 generates a control signal that causes the mechanical deck 29 to execute the loading and supplies the generated control signal to the mechanical deck 29. As a result, the mechanical deck 29 performs the loading corresponding to the control signal.

In addition, since the process corresponding to the operation for the video camera 1 is the loading, the CPU 32 generates a display section control signal that controls the display section such as the panel 12 and the view finder 13 that are being used.

When the panel 12 and the view finder 13 are composed of an LCD, the generated display section control signal causes the power consumed by the backlight of the LCD and the power consumed by the drive circuit of the LCD to be reduced.

In addition, the display section control signal can be output to an external device connected to the video camera 1 through the external terminal. For example, when the video camera 1 and an LCD display monitor are connected through an external interface such as the IEEE (Institute of Electrical and Electronics Engineers) 1394, the display section control signal causes the power consumed by the backlight of the external LCD display monitor to be reduced.

When the unloading is performed, the same process as the loading is performed. In other words, when a cassette dismounting button of the switch 11 is pressed, an electric signal corresponding to the dismounting operation is generated and the generated electric signal is supplied to the baseband signal process section 24.

The CPU 32 analyzes the electronic signal and generates a control signal that causes the mechanical deck 29 to execute a process corresponding to the dismounting operation. Since the dismounting operation is performed, the CPU 32 generates a control signal that causes the mechanical deck 29 to execute the unloading. The generated control signal is supplied to the mechanical deck 29. The mechanical deck 29 performs the unloading corresponding to the supplied control signal.

In addition, since the process corresponding to the operation for the video camera 1 is the unloading, the CPU 32 generates a display section control signal that controls the display section such as the panel 12 and the view finder 13. When the unloading of the cassette is executed, the generated display section control signal causes the power consumed by the panel 12 and the view finder 13 to be reduced and thereby their brightness to be decreased.

When the fast-forward/rewind operation for the cassette is performed in the video camera 1, the same process as the loading/unloading is performed. In other words, when a fast-forward/rewind button is operated, an electric signal corresponding to the operation is generated. The generated electric signal is supplied to the baseband signal process section 24.

The CPU 32 analyzes the supplied signal and generates a control signal that causes the mechanical deck 29 to perform the fast-forward/rewind. The generated control signal is supplied to the mechanical deck 29. The mechanical deck 29 performs the fast-forward/rewind process corresponding to the supplied control signal.

Since the process corresponding to the operation for the video camera 1 is the fast-forward/rewind of the tape, the CPU 32 generates the display section control signal that controls the panel 12, the view finder 13, and so forth. When the fast-forward/rewind of the tape is performed, the generated display section control signal causes the power consumed by the panel 12 and the view finder 13 to be reduced and thereby their brightness to be decreased.

When the loading or the like of the cassette is performed, if the power consumed by the display section such as the panel 12 and the view finder 13 is controlled, the following effects can be obtained.

The loading or the like of the cassette consumes larger power than other processes. In other words, when the loading or the like of the cassette is performed, by reducing the power consumed by the video camera 1, the power consumed by the overall video camera 1 can be reduced.

In addition, when the loading or the like of the cassette is performed, the frame of a photographic subject is not decided and a recorded image is not reproduced. In other words, when the loading or the like is performed, the user of the video camera 1 does not need to use the panel 12 and the view finder 13. Thus, although the power consumed by the video camera 1 is reduced, the user's operation of the video camera 1 is not affected.

Next, a modification of the control method of the display section according to the present invention will be described. In this modification, the display section is controlled using information about the remaining power of a battery such as a lithium ion cell used in the video camera 1. In recent years, particularly, the performance of the batteries has been improved. A battery that indicates remaining power in the accuracy of one minute has been proposed. The signal process section of the video camera 1 can detect the remaining power of the battery.

For example, when the switch 11 is operated, an electric signal for a process corresponding to the operation is generated. The generated electric signal is supplied to the baseband signal process section 24. The CPU 32 that controls the baseband signal process section 24 analyzes the supplied electric signal and generates a control signal that causes the video camera 1 to execute the process corresponding to the operation.

In addition, the CPU 32 analyzes the power consumed by the process corresponding to the operation. When the power necessarily consumed by the process is larger than a predetermined threshold value, the CPU 32 may determine that the process be a predetermined process and reduces the power consumed by the display section such as the panel 12 and the view finder 13.

Since the CPU 32 can detect the remaining power of the battery, when the remaining power of the battery becomes smaller than the predetermined threshold value, the CPU 32 may reduce the power consumed by the display section such as the panel 12 and the view finder 13.

Next, another modification will be described. In this modification, the current consumed by the process of the loading or the like is calculated. The current consumed by the display section is decreased by the calculated value. More specifically, a current control system of which the current consumed by either the panel 12 or the view finder 13 is decreased and the saved current is used for the current consumed by the predetermined process such as the loading or the like is executed. In this modification, the power consumption is described with respect to a current. However, since the power consumption is proportional to the current consumption, by controlling the current consumption, the power consumption can be controlled.

Fig. 2 is a flow chart describing this modification. The flow chart shown in Fig. 2 contains the following parameters that have the following meaning.
Ib: current that can be supplied from the power supply such as a battery or an AC adaptor (where Ib > Is + Ip + Ibl and Ib > Is + Iv),
Is: current consumed by the video camera 1 in the normal operation state (excluding the current consumed by the display section),
Ip: current necessarily consumed by the panel 12 to illuminate it with 100 % brightness,
Iv: current necessarily consumed by the view finder 13 to illuminate it with 100 % brightness,
Ibl: current necessarily consumed by the backlight of the panel 12 to illuminate it with 100 % brightness, and
Ic: current necessarily consumed by the loading or the like

At step S1, the current consumed by the overall video camera 1 that executes the loading or the like is calculated (the sum of Is, Ip, Iv, Ibl, and Ic). The calculated current and the current Ib supplied from the power supply such as a battery or an AC adaptor are compared.

When the compared result at step S1 denotes that the current Ib is larger than the current consumed by the video camera 1, the flow advances to step S2. At step S2, the current control system is turned off. Thus, the current control system does not operate. In other words, when the current consumed by the video camera 1 can be supplied from the power supply, it is not necessary to operate the current control system.

However, for example, when the remaining power of the battery of the video camera 1 is low, the current consumed by the video camera 1 may be larger than the current supplied from the power supply, When the compared result at step S1 denotes that the current consumed by the video camera 1 is larger than the current supplied from the power supply, the flow advances to step S3. At step S3, the current control system is turned on.

When the current control system is turned on, the flow advances to step S4. At step S4, it is determined whether or not the panel is used. When the determined result at step S4 denotes that the panel is used, since the view finder is not used, it is considered that the current consumed by the panel is a controllable current. Thereafter, the flow advances to step S5. When the determined result at step S4 denotes that the panel is not used, it is considered that the view finder is used and the current consumed by the view finder is a controllable current. Thereafter, the flow advances to step S14.

At step S5, the current Ib supplied from the power supply and the current (Is + Ip + Ibl + Ic) consumed by the video camera 1 in the case that the panel is used are compared. When the current Ib is larger than the current (Is + Ip + Ibl + Ic), the current consumed by the video camera 1 in the case that the panel is used can be supplied from the power supply. Thus, the flow advances to step S12. At step S12, the current control system is turned off.

When the remaining power of the battery is low and the current Ib is smaller than the current (Is + Ip + Ibl + Ic) consumed by the video camera 1, the flow advances to step S6.

At step S6, the current (Ip + Ibl), which is a controllable current, and the current Ic consumed in the case that the predetermined process such as the loading or the like is executed are compared. When the current Ic is larger than the current (Ip + Ibl), even if the panel and the backlight are turned off, namely the current (Ip + Ibl) is 0, the current Ic consumed by the loading or the like is not able to be compensated. Thus, when the current Ic is large, if the process of the loading or the like is performed, the flow advances to step S13. At step S13, for example an over-current protection circuit operates, causing the video camera 1 to shut down.

When the compared result at step S6 denotes that the current (Ip + Ibl) is equal to or larger than the current Ic, the flow advances to step S7. At step S7, it is determined whether or not the current Ic is necessarily consumed, namely the predetermined process of the loading or the like is executed. When the process of the loading or the like is not executed and thereby the current Ic is not necessarily consumed, the process is completed without changing the current consumed by the panel and the backlight (at step S11).

When the determined result at step S7 denotes that the current Ic is necessarily consumed, the flow advances to step S8. At step S8, the current (Ip + Pb1) consumed by the panel and the backlight is changed to the current (Ip + Ibl - Ic). In other words, the current consumed by the panel and the backlight is decreased by Ic and the saved current Ic is used by the predetermined process of the loading or the like.

At step S8, for simplicity of the description, the current consumed by the panel and the backlight is decreased by Ic. Instead, the current consumed by the panel and the backlight may be decreased by larger than the current consumed by the predetermined process of the loading or the like.

At step S9, the current Ic saved by the current consumed by the panel and the backlight is used by the predetermined process of the loading or the like.

When the process of the loading or the like has been completed, the flow advances to step S10. At step S10, since the process of the loading or the like has been completed, the current consumed by the panel and the backlight is restored to the current (Ip + Ibl). In other words, the brightness of the panel and the backlight is restored to their original brightness. Thereafter, the process is completed (at step S11).

When the determined result at step S4 denotes that the panel be not used, the flow advances to step S14. At step S14, the current Ib supplied from the power supply and the current (Is + Iv + Ic) consumed by the video camera 1 in the case that the view finder is used are compared.

When the determined result at step S14 denotes that the current Ib is larger than the current (Is + Iv + Ic), since the current consumed by the video camera 1 can be compensated by the current Ib supplied from the power supply, the power control system is turned off (at step S12).

When the compared result at step S14 denotes that the current 1b is smaller than the current (Is + Iv + Ic), the flow advances to step S15. At step S15, the controllable current Iv consumed by the view finder and the current Ic consumed by the process of the loading or the like are compared.

When the compared result at step S15 denotes that the current Ic is larger than the current Iv, even if the view finder is turned off, namely the current Iv is 0, the current consumed by the process of the loading or the like is not able to be compensated. Thus, when the current Ic is larger than the current Iv, if the loading or the like is executed, the flow advances to step S13. At step S13, for example the over-current protection circuit operates, causing the video camera 1 to shut down.

When the current Iv is equal to or larger than the current Ic, the flow advances to step S16. At step S16, it is determined whether or not the current Ic is necessarily consumed, namely the process of the loading or the like is performed.

When the determined result at step S16 denotes that the loading or the like is not performed, namely the current Ic is not necessarily consumed, the process is completed without changing the current Iv consumed by the view finder (at step S11).

When the determined result at step S16 denotes that the process of the loading or the like is executed, thus the current Ic is necessarily consumed, the flow advances to step S17. At step S17, the current consumed by the view finder is decreased by the current Ic used by the process of the loading or the like. In other words, the current consumed by the view finder is the current (Iv - Ic).

Instead, the current consumed by the view finder may be decreased by larger than the current consumed by the process of the loading or the like.

Thereafter, the flow advances to step S18. At step S18, the current saved by the current consumed by the view finder is used by the predetermined process of the loading or the like.

When the process of the loading or the like has been completed at step S18, the flow advances to step S19. At step S19, the current consumed by the view finder is changed to Iv and the brightness of the view finder is restored to the original brightness. Thereafter, the process is completed (at step S11).

Even if the current supplied from the power supply is low, the current consumed by the display section such as the panel and the view finder is decreased by larger than the current consumed by the predetermined process of the loading or the like. Thus, the current necessarily consumed by the predetermined process of the loading or the like can be obtained. In addition, the predetermined process of the loading or the like can be performed with the saved current.

It should be understood by those skilled in the art that various modifications, combinations, subcombinations and alternations may occur depending on design requirements and other factors insofar as they are within the scope of the appended claims or the equivalents thereof. For example, the present invention may be applied to electronic apparatuses such as personal computers and digital still cameras that have a display section.

## Claims

1. An electronic apparatus having a display section and input means, comprising:
execution means for executing a process corresponding to an operation of the input means; and
control means for reducing power consumed by the display section when the process is a predetermined process.

2. The electronic apparatus as set forth in claim 1, further comprising:
image capturing means for capturing a photographic subject;
recording means for recoding an image signal generated by the image capturing means to a record medium; and
reproduction means for reproducing an image signal from the record medium and displaying the reproduced image on the display section.

3. The electronic apparatus as set forth in claim 1 or claim 2,
wherein the predetermined process is a process of which it is not necessary to watch the display section.

4. The electronic apparatus as set forth in claim 1 or claim 2, further comprising:
detection means for detecting a process which necessarily consumes power larger than a predetermined threshold value as the predetermined process.

5. The electronic apparatus as set forth in claim 1 or claim 2,
wherein the control means is means for reducing power consumed by the display section by larger than power consumed by the predetermined process.

6. The electronic apparatus as set forth in claim 2,
wherein the record medium is a magnetic tape, and
wherein the predetermined process is at least one of a loading operation, an unloading operation, a fast-forward operation, and a rewind operation of a cassette of the magnetic tape.

7. An electronic apparatus control method, comprising the steps of:
executing a process corresponding to an operation of input means; and
reducing power consumed by a display section when the process is a predetermined process.

8. The electronic apparatus control method as set forth in claim 7,
wherein the control step is performed by reducing power consumed by the display section by larger than power consumed by the predetermined process.
